# FASCICULE DE BREVET EUROPEEN

(11) **EP 2 637 519 B1**
(45) Date de publication et mention de la délivrance du brevet: **02.12.2020**
(21) Numéro de dépôt: 11802472.8
(22) Date de dépôt: 04.11.2011
(51) Int. Cl.: A23N 1/02, A47J 19/02, B30B 9/12

(54) **APPAREIL ELECTROMENAGER DE PREPARATION CULINAIRE COMPORTANT UNE VIS DE PRESSAGE**
ELEKTRISCHES KÜCHENGERÄT MIT EIN DRUCKSCHRAUBE
ELECTRICAL KITCHEN APPLIANCE COMPRISING A PRESSING SCREW

(30) Priorité: 09.11.2010 FR 1059260
(43) Date de publication de la demande: 18.09.2013
(73) Titulaire: SEB S.A., 69130 Ecully (FR)
(72) Inventeur: CHARLES, Patrick, F-65290 Louey (FR); DOMINGUEZ, Augustin, F-65000 Tarbes (FR)
(74) Mandataire: SEB Développement
(86) Numéro de dépôt international: PCT/FR2011/052580
(87) Numéro de publication internationale: WO 2012/062988

(56) Documents cités:
- WO-A1-2007/148872
- CN-U- 201 530 138
- DE-B- 1 185 343
- FR-A1- 2 932 665
- FR-A1- 2 938 415
- FR-A1- 2 939 355
- KR-B1- 100 966 607
- US-A- 2 912 923

## Description

La présente invention concerne le domaine technique des appareils électroménagers de préparation culinaire comportant une vis de pressage agencée dans une enceinte de travail selon un axe de rotation principalement vertical.

La présente invention concerne plus particulièrement les appareils électroménagers de préparation culinaire de type pressoir, comportant une vis de pressage associée à un élément de filtration, pour réaliser des jus ou des coulis, et/ou de type hachoir, comportant une vis de pressage associée à un couteau rotatif en sortie, pour réaliser des préparations hachées.

Le document WO 2007 148872 divulgue un appareil comportant une vis de pressage agencée selon un axe vertical dans un récipient de travail disposé sur un boîtier moteur. La vis de pressage est entourée par un filtre de pressage. La vis de pressage est entrainée en rotation par sa base et présente un axe supérieur inséré dans un logement central inférieur du couvercle fermant le récipient de travail. Cette fixation bidirectionnelle de la vis de pressage permet de réduire les vibrations de la vis de pressage. Cette disposition permet ainsi de réduire le bruit de l'appareil. Cette disposition permet aussi de prévenir l'abrasion de la vis de pressage.

Un appareil selon le préambule de la revendication 1 est connu du document KR100966607B1.

L'objet de la présente invention est de mieux contrôler les efforts exercés par la vis de pressage lors du fonctionnement de l'appareil.

Cet objet est atteint avec un appareil électroménager de préparation culinaire comportant une vis de pressage entrainée en rotation selon un axe principalement vertical dans une enceinte de travail présentant une goulotte d'introduction d'aliments communiquant avec l'extrémité supérieure de la vis de pressage et une sortie d'évacuation, la vis de pressage comportant au moins deux filets principaux présentant une face inférieure s'étendant sur au moins un quart de la circonférence de la vis de pressage, un disque de prédécoupe étant agencé entre la goulotte d'introduction d'aliments et la vis de pressage, le disque de prédécoupe comportant des passages pour les aliments découpés, chaque passage pour les aliments découpés étant agencé entre un bord d'attaque supérieur et un bord d'appui inférieur, le disque de prédécoupe étant amovible par rapport à la vis de pressage, du fait que lesdits au moins deux filets principaux s'étend(ent) depuis l'extrémité supérieure de la vis de pressage, lesdits au moins deux filets principaux ménageant au moins deux passages d'introduction des aliments distincts, au moins un passage pour les aliments découpés étant disposé en regard de chaque passage d'introduction des aliments, et en ce que le disque de prédécoupe comporte des conformations inférieures d'entraînement prévues pour coopérer avec des conformations supérieures d'entraînement ménagées sur l'extrémité supérieure des filets principaux de la vis de pressage.

Ces dispositions permettent de faciliter la découpe des aliments introduits par la goulotte, de répartir les aliments à presser de manière plus équilibrée autour de la vis de pressage, ce qui contribue à diminuer les phénomènes vibratoires et permet d'utiliser une construction plus économique. Ces dispositions permettent aussi de faciliter le pressage des aliments introduits par la goulotte en les sectionnant préalablement au pressage et en introduisant les morceaux découpés dans chacun des conduits ménagés par la vis de pressage. pour faciliter l'introduction des aliments dans les différents conduits ménagés par la vis de pressage, Ces dispositions permettent de faciliter l'introduction des aliments dans les différents conduits ménagés par la vis de pressage.

Avantageusement alors, pour une meilleure répartition des aliments, la face inférieure de chacun des filets principaux s'étend sur au moins la moitié de la circonférence de la vis de pressage.

Avantageusement encore, pour améliorer le rendement de pressage, les filets principaux s'étendent sur au moins les deux tiers de la hauteur de la vis de pressage selon l'axe.

Avantageusement encore, pour augmenter les surfaces de pressage, au moins un filet secondaire agencé entre deux filets principaux s'interrompt à distance de l'extrémité supérieure de la vis de pressage.

Avantageusement encore, pour faciliter la répartition des aliments dans les différents conduits de la vis de pressage et pour améliorer le cas échéant le maintien du disque de prédécoupe, les filets principaux s'élargissent vers l'extrémité supérieure de la vis de pressage.

Selon une forme de réalisation avantageuse, la vis de pressage est montée amovible dans l'enceinte de travail.

Selon une forme de réalisation préférée, l'appareil électroménager de préparation culinaire comporte un boîtier logeant un moteur électrique relié à une sortie d'entraînement supérieure prévue pour l'entraînement de la vis de pressage. Si désiré, la vis de pressage peut être entraînée par l'intermédiaire d'un organe de transmission. Le disque de prédécoupe peut notamment appartenir au dit organe de transmission.

Selon une forme de réalisation préférée, l'enceinte de travail est montée amovible sur le boîtier. En alternative, le boîtier pourrait être solidaire de l'enceinte de travail.

Selon une forme de réalisation avantageuse, l'enceinte de travail comporte un récipient de travail fermé par un couvercle, le récipient de travail présentant la sortie d'évacuation, le couvercle présentant la goulotte d'introduction d'aliments.

Selon une forme de réalisation adaptée à l'obtention de jus ou de coulis, un élément de filtration sépare l'enceinte de travail en un premier compartiment logeant la vis de pressage, et un deuxième compartiment présentant la sortie d'évacuation.

Selon une forme de réalisation adaptée à l'obtention de préparations hachées, au moins une grille et au moins un couteau rotatif sont agencés entre la vis de pressage et la sortie d'évacuation.

Selon une forme de réalisation préférée adaptée à la taille des appareils domestiques, la vis de pressage présente une symétrie d'ordre 2, 3 ou 4.

L'invention sera mieux comprise à l'étude d'un exemple de réalisation, pris à titre nullement limitatif, illustré dans les figures annexées, dans lesquelles :
- la figure 1 illustre un exemple d'appareil électroménager de préparation culinaire selon l'invention, représenté en élévation et en coupe partielle, le boîtier logeant le moteur étant représenté schématiquement,
- la figure 2 est une vue en perspective de dessus d'un élément de filtration logé dans l'enceinte de travail de l'appareil représenté sur la figure 1, la figure 3 illustrant l'élément de filtration et le récipient de travail de l'appareil illustré sur la figure 1 selon une autre orientation,
- les figures 4 et 5 sont une vue en perspective de dessus et une vue de dessus d'une vis de pressage logée dans l'enceinte de travail de l'appareil illustré sur la figure 1,
- la figure 6 montre la sortie d'entraînement supérieure et une partie du boîtier de l'appareil illustré sur la figure 1.
- les figures 7 et 8 sont des vues en perspective de dessus et en perspective de dessous d'un organe de prédécoupe logé dans l'enceinte de travail de l'appareil illustré sur la figure 1.

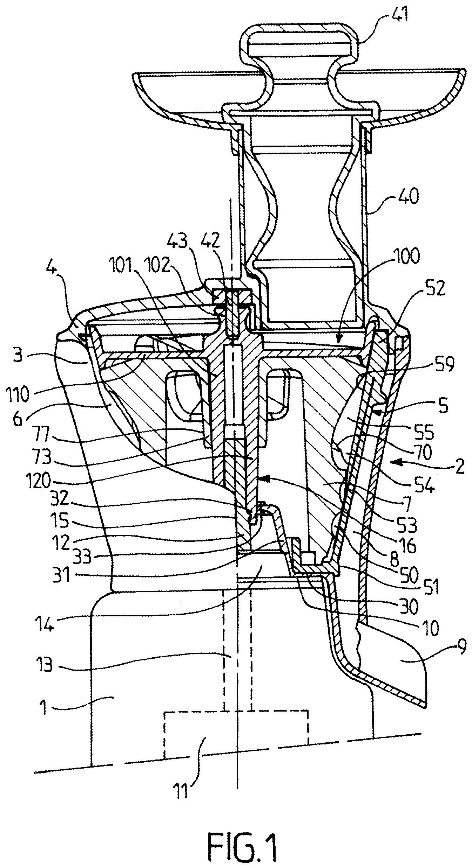

L'appareil électroménager de préparation culinaire illustré sur la figure 1 comporte un boîtier 1 et une enceinte de travail 2 présentant une goulotte d'introduction d'aliments 40 et une sortie d'évacuation 9. Une vis de pressage 7 est entrainée en rotation selon un axe 15 principalement vertical dans l'enceinte de travail 2. La goulotte d'introduction d'aliments 40 communique avec l'extrémité supérieure de la vis de pressage 7.

Un élément de filtration 5 sépare l'enceinte de travail 2 en un premier compartiment 6 logeant la vis de pressage 7, et un deuxième compartiment 8 présentant la sortie d'évacuation 9.

L'enceinte de travail 2 comporte un récipient de travail 3 fermé par un couvercle 4. Le récipient de travail 3 présente la sortie d'évacuation 9.

Le boîtier 1 forme un socle 10 sur lequel repose le récipient de travail 3. Le boîtier 1 loge un moteur électrique 11, représenté schématiquement. Le moteur électrique 11 est relié à une sortie d'entraînement supérieure 12, si désiré par l'intermédiaire d'un dispositif de transmission 13, représenté schématiquement. La sortie d'entraînement supérieure 12 est agencée sur le socle 10.

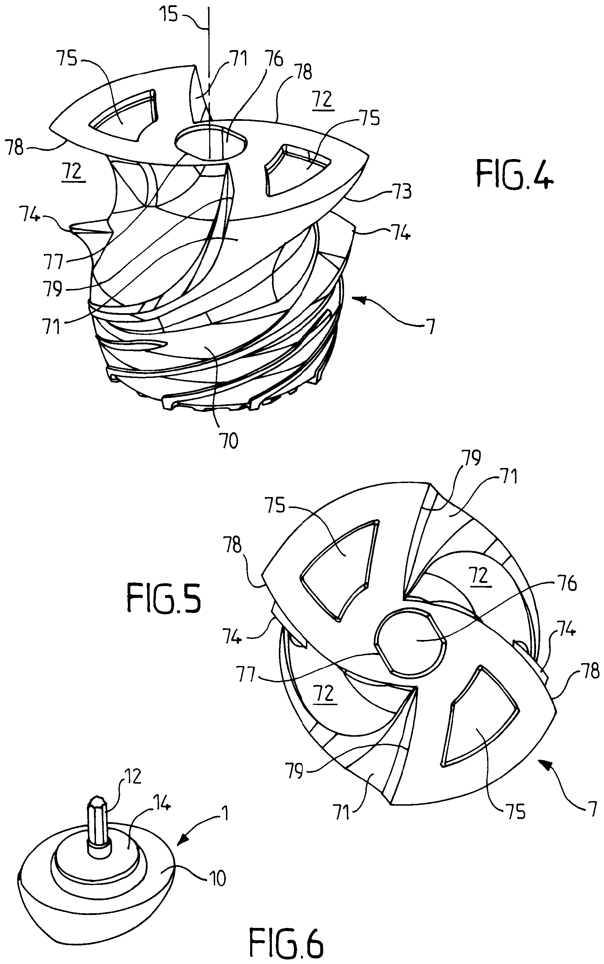

Plus particulièrement, tel que visible sur les figures 1 et 6, la sortie d'entraînement supérieure 12 sort d'une protubérance 14 du socle 10. La sortie d'entraînement supérieure 12 est entraînée en rotation autour d'un axe 15. La sortie d'entraînement supérieure 12 est prévue pour l'entraînement de la vis de pressage 7, si désiré par l'intermédiaire d'un organe de transmission.

Dans l'exemple de réalisation illustré sur la figure 1, le récipient de travail 3 est monté amovible sur le boîtier 1. L'enceinte de travail 2 est ainsi montée amovible sur le boîtier 1. L'élément de filtration 5 est monté amovible dans le récipient de travail 3. La vis de pressage 7 est montée amovible dans l'enceinte de travail 2.

Le récipient de travail 3 présente une ouverture supérieure fermée par le couvercle 4. La sortie d'évacuation 9 est ménagée dans une partie inférieure du récipient de travail 3 à l'extérieur de l'élément de filtration 5. Le récipient de travail 3 présente une paroi de fond 30 comportant un bossage axial 31 prévu pour coiffer la protubérance 14.

Le récipient de travail 3 est prévu pour le passage d'un moyen de transmission 16 entre le moteur électrique 11 et la vis de pressage 7. A cet effet le bossage axial 31 présente une ouverture axiale 32. Un joint 33 est avantageusement monté dans l'ouverture axiale 32 pour assurer une étanchéité avec les moyens de transmission 16.

Le couvercle 4 peut être verrouillé sur le récipient de travail 3, notamment au moyen de baïonnettes (non représentées sur les figures). Le couvercle 4 présente la goulotte d'introduction d'aliments 40. La goulotte d'introduction d'aliments 40 est disposée latéralement par rapport à l'axe de la vis de pressage 7. Un poussoir 41 est agencé dans la goulotte d'introduction d'aliments 40. Le couvercle 4 comporte un organe de guidage axial 42 avantageusement monté souple dans un élément élastique 43.

L'élément de filtration 5 comporte au moins une partie filtrante 55 agencée en regard de la vis de pressage 7. Pour faciliter l'extraction du jus, la ou les parties filtrantes 55 sont agencées principalement entre la vis de pressage 7 et la sortie d'évacuation 9.

Tel que représenté sur la figure 1, l'élément de filtration entoure la vis de pressage. La ou les parties filtrantes 55 sont agencées du côté de la sortie d'évacuation 9. De préférence la ou les parties filtrantes 55 sont agencées dans une moitié de l'enceinte de travail 2 de part et d'autre de la sortie d'évacuation 9.

L'élément de filtration comporte avantageusement une base 51 et une couronne supérieure 52, la ou les parties filtrantes 55 étant agencées entre la base 51 et la couronne supérieure 52.

Un anneau intermédiaire 53 peut être agencé entre la base 51 et la couronne supérieure 52. Plus particulièrement, une partie filtrante inférieure 50 est agencée entre la base 51 et l'anneau intermédiaire 53. Une partie filtrante supérieure 54 est agencée entre l'anneau intermédiaire 53 et la couronne supérieure 52.

Plus particulièrement, l'élément de filtration 5 repose sur la paroi de fond 30 du récipient de travail 3. Le couvercle 4 maintient la couronne supérieure 52 de l'élément de filtration 5.

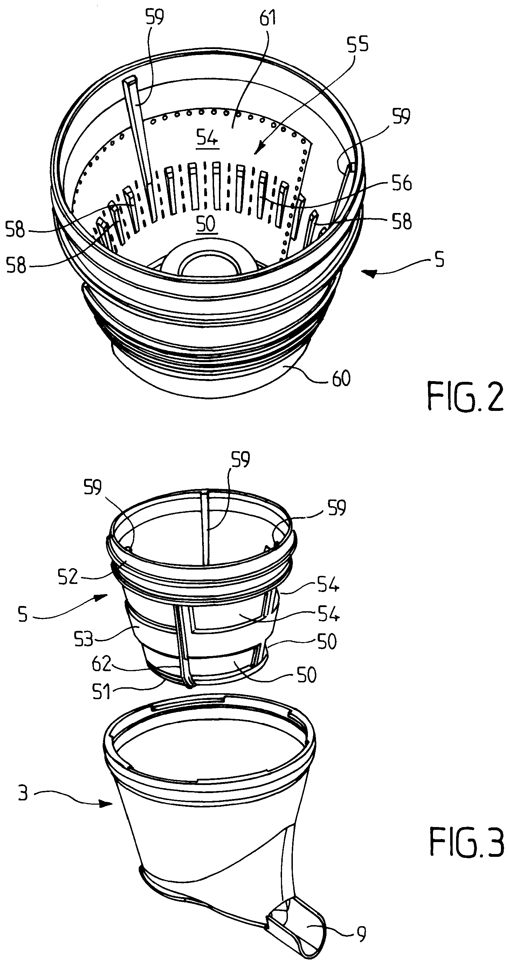

Tel que visible sur la figure 2, l'élément de filtration 5 comporte une zone interne nervurée 56 s'étendant au dessus d'au moins une partie filtrante inférieure. La zone interne nervurée 56 présente par exemple une série de nervures intermédiaires 58 verticales. Avantageusement la zone interne nervurée 56 s'étend au-delà de la ou des parties filtrantes 56. La zone interne nervurée 56 est de préférence annulaire pour favoriser le broyage des aliments tout autour de la vis de pressage.

Tel que visible sur les figures 1 à 3, l'élément de filtration 5 présente au moins une partie filtrante supérieure 54 s'étendant au dessus de la zone interne nervurée 56.

Selon une forme de réalisation préférée, la ou les parties filtrantes supérieures 54 présentent des passages filtrants de taille supérieure à la taille des passages filtrants de la ou des parties filtrantes inférieures 50.

Tel que visible sur les figures 1 à 3, l'élément de filtration 5 comporte au moins une nervure supérieure 59 s'étendant au dessus de la ou des parties filtrantes supérieures. La ou les nervures supérieures coopèrent avec les filets de la partie supérieure de la vis de pressage 7 pour favoriser le convoyage des aliments vers les zones de pressage au niveau de la ou des parties filtrantes 55.

Tel que représenté sur les figures 1 à 3, l'élément de filtration 5 comporte un corps de filtre 60 en matière plastique surmoulé sur au moins une tôle métallique perforée 61 formant la ou les parties filtrantes 55. La ou les nervures supérieures 59 et les nervures intermédiaires peuvent ainsi être directement issues du corps de filtre 60. D'autres modes de réalisation peuvent toutefois être envisagés, comme une ou plusieurs parties filtrantes 55 rapportées par collage sur le corps de filtre 60 ou insérées contre des conformations de retenue du corps de filtre 60.

L'élément de filtration 5 est indexé par rapport au récipient de travail 3 par tout moyen connu tel que notamment une ou plusieurs conformations 62.

Tel que visible sur les figures 1, 4 et 5, la vis de pressage 7 comporte un corps de vis 70 muni de filets prévus pour pousser les aliments contre l'élément de filtration 5.

Tel que mieux visible sur les figures 4 et 5, la vis de pressage 7 comporte deux filets principaux 71 ménageant deux passages d'introduction d'aliments 72 distincts. La vis de pressage 7 présente une symétrie d'ordre 2 permettant de mieux répartir les aliments à presser autour de la vis de pressage 7.

Les filets principaux 71 s'étendent depuis l'extrémité supérieure de la vis de pressage 7. Les filets principaux 71 présentent chacun un bord d'attaque supérieur 78 ainsi qu'un bord de fuite supérieur 79. Ainsi chacun des passages d'introduction d'aliments 72 est délimité partiellement par l'un des bords d'attaque supérieurs 78 et l'un des bords de fuite supérieurs 79. Les filets principaux 71 s'élargissent vers l'extrémité supérieure de la vis de pressage 7. Chacun des filets principaux 71 présente une face inférieure 73 s'étendant sur au moins un quart de la circonférence de la vis de pressage 7, et de préférence sur au moins la moîtié de la circonférence de la vis de pressage 7, tel que visible sur la figure 4. Les filets principaux 71 s'étendent sur au moins les deux tiers de la hauteur de la vis de pressage 7 selon l'axe 15, tel que visible sur la figure 4.

Tel que visible sur les figures 4 et 5, au moins un filet secondaire 74 agencé entre deux filets principaux 71 s'interrompt à distance de l'extrémité supérieure de la vis de pressage 7. Des conformations supérieures d'entraînement 75 sont ménagées sur l'extrémité supérieure des filets principaux 71 de la vis de pressage 7. Tel que représenté sur les figures 4 et 5 les conformations supérieures d'entraînement 75 sont formées par des cavités. En alternative ou en complément, les conformations supérieures d'entraînement 75 pourraient comporter des protubérances.

La vis de pressage 7 comporte un passage axial 76, visible sur les figures 1, 4 et 5. Plus particulièrement, la vis de pressage 7 repose sur l'élément de filtration 5. La vis de pressage 7 amovible est susceptible d'être entraînée en rotation par la sortie d'entraînement supérieure 12, mieux visible sur la figure 6.

Le disque de prédécoupe 110 visible sur la figure 1 est agencé entre la goulotte d'introduction d'aliments 40 et la vis de pressage 7. Le disque de prédécoupe 110 est logé dans le premier compartiment 6.

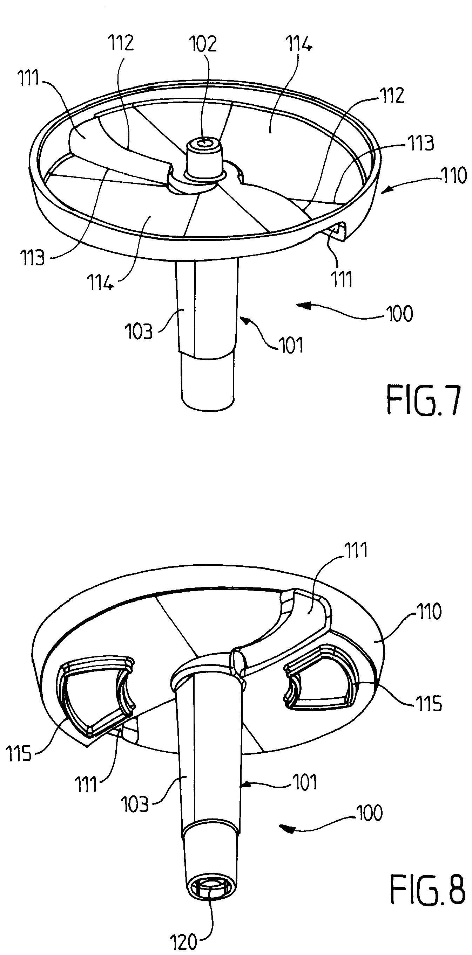

Le disque de prédécoupe 110 comporte au moins un passage pour les aliments découpés 111 disposé en regard de chaque passage d'introduction des aliments 72. Tel que visible sur les figures 7 et 8, le disque de prédécoupe 110 comporte deux passages pour les aliments découpés 111 agencés chacun entre un bord d'attaque supérieur 112 et un bord d'appui inférieur 113. Chaque bord d'appui inférieur 113 est prolongé par une surface d'appui 114 prévue pour recevoir les aliments issus de la goulotte d'introduction d'aliments 40.

Le disque de prédécoupe 110 est amovible par rapport à la vis de pressage 7. Le disque de prédécoupe 110 comporte des conformations inférieures d'entraînement 115 prévues pour coopérer avec des conformations supérieures d'entraînement 75 ménagées sur l'extrémité supérieure des filets principaux 71 de la vis de pressage 7.

Dans l'exemple de réalisation illustré sur les figures 1 à 8, l'entraînement en rotation de la vis de pressage 7 est assuré par un élément rotatif 100 formant le disque de prédécoupe 110. L'élément rotatif 100 comporte un organe d'entraînement 120 prévu pour être entraîné en rotation par la sortie d'entraînement supérieure 12, si désiré par l'intermédiaire d'un moyen de transmission complémentaire. L'élément rotatif 100 est amovible du premier compartiment 6 par l'ouverture supérieure du récipient de travail 3.

Tel que mieux visible sur la figure 8, l'organe d'entraînement 120 est ménagé dans une extrémité d'un moyeu 101 issu du disque de prédécoupe 110.

Tel que visible sur la figure 7, l'élément rotatif 100 comporte un logement 102 prévu pour recevoir l'organe de guidage axial 42. Le logement 102 est ménagé dans la partie supérieure du moyeu 101. La figure 1 montre l'élément rotatif 100 en place dans le premier compartiment 6 entre la vis de pressage 7 et la goulotte d'introduction d'aliments 40. Plus particulièrement, l'élément rotatif 100 repose sur la vis de pressage 7. L'élément rotatif 100 disposé sur la vis de pressage 7 agencée dans le premier compartiment 6 entraîne en rotation la vis de pressage 7.

L'élément rotatif 100 présente une conformation d'entraînement 103, mieux visible sur les figures 5 et 6, prévue pour coopérer avec une conformation d'entraînement associée 77 de la vis de pressage 7, mieux visible sur les figures 4 et 5.

Plus particulièrement, la conformation d'entraînement 103 est ménagée sur le moyeu 101 ; la conformation d'entraînement associée 77 est ménagée dans le passage axial 76.

L'appareil selon l'invention s'utilise et fonctionne de la manière suivante.

Les aliments introduits dans la goulotte d'introduction d'aliments 40 sont découpés ou séparés par l'un ou l'autre des bords d'attaque supérieurs 112 du disque de prédécoupe 110 et traversent le passage pour les aliments découpés 111 correspondant pour atteindre le passage d'introduction des aliments 72 disposé en regard.

Ainsi les aliments sont répartis de manière plus équilibrée autour de la vis de pressage 7, notamment dans la partie supérieure de la vis de pressage 7, ce qui favorise une bonne rotation de la vis de pressage 7. Un fonctionnement plus régulier, moins sujet aux à-coups peut ainsi être obtenu, ce qui permet de simplifier le maintien et/ou l'entrainement de la vis de pressage 7.

La vis de pressage 7 pourrait comporte au moins deux filets principaux 71 ménageant au moins deux passages d'introduction d'aliments 72 distincts , chacun desdits filets principaux 71 présentant de préférence une face inférieure 73 s'étendant sur au moins un quart de la circonférence de la vis de pressage 7.

De préférence la vis de pressage 7 comporte entre deux et quatre filets principaux. Avantageusement alors la vis de pressage 7 présente une symétrie d'ordre 2, 3 ou 4.

A titre de variante hors du cadre des revendications, l'élément rotatif 100 monté entre la sortie d'entraînement supérieure 12 et la vis de pressage ne comporte pas nécessairement un disque de prédécoupe.

A titre de variante hors du cadre des revendications, les bords d'attaque supérieurs 78 de la vis de pressage 7 pourraient former des organes de prédécoupe.

A titre de variante, la vis de pressage 7 pourrait comporter un organe d'entraînement 120 prévu pour être entraîné en rotation par la sortie d'entraînement supérieure 12.

A titre de variante, l'axe 15 n'est pas nécessairement agencé selon la direction verticale, mais peut être agencé selon une direction principalement verticale, présentant un angle inférieur ou égal à 45° par rapport à la direction verticale.

A titre de variante, le récipient de travail 3 ne loge pas nécessairement la majeure partie du disque de prédécoupe 110, et/ou la majeure partie de la vis de pressage 7 et/ou la majeure partie de l'élément de filtration 5.

A titre de variante la vis de pressage 7 pourrait être agencée dans un récipient de travail 3 formant un conduit reliant la goulotte d'introduction d'aliments à la sortie d'évacuation, une grille et un couteau rotatif étant agencés entre la vis de pressage et la sortie d'évacuation, pour hacher les aliments compressés par la vis de pressage 7. L'enceinte de travail 2 ne loge alors pas nécessairement un élément de filtration 5.

A titre de variante, le récipient de travail 3 pourrait être solidaire du boîtier 1.

A titre de variante, une autre sortie d'évacuation pourrait être envisagée pour évacuer les résidus du premier compartiment 6 vers l'extérieur et/ou vers un réceptacle à déchets.

La présente invention n'est nullement limitée aux exemples de réalisation décrits, mais englobe de nombreuses modifications dans le cadre des revendications.

## Revendications

1. Appareil électroménager de préparation culinaire, comportant une vis de pressage (7) entrainée en rotation selon un axe (15) principalement vertical dans une enceinte de travail (2) présentant une goulotte d'introduction d'aliments (40) communiquant avec l'extrémité supérieure de la vis de pressage (7), et une sortie d'évacuation (9), la vis de pressage (7) comportant au moins deux filets principaux (71) présentant une face inférieure (73) s'étendant sur au moins un quart de la circonférence de la vis de pressage (7), un disque de prédécoupe (110) étant agencé entre la goulotte d'introduction d'aliments (40) et la vis de pressage (7), le disque de prédécoupe (110) comportant des passages pour les aliments découpés (111), chaque passage pour les aliments découpés (111) étant agencé entre un bord d'attaque supérieur (112) et un bord d'appui inférieur (113), le disque de prédécoupe (110) étant amovible par rapport à la vis de pressage (7), **caractérisé en ce que** lesdits au moins deux filets principaux (71) s'étend(ent) depuis l'extrémité supérieure de la vis de pressage (7), lesdits au moins deux filets principaux (71) ménageant au moins deux passages d'introduction des aliments (72) distincts, au moins un passage pour les aliments découpés (111) étant disposé en regard de chaque passage d'introduction des aliments (72), et **en ce que** le disque de prédécoupe (110) comporte des conformations inférieures d'entraînement (115) prévues pour coopérer avec des conformations supérieures d'entraînement (75) ménagées sur l'extrémité supérieure des filets principaux (71) de la vis de pressage (7).

2. Appareil électroménager de préparation culinaire selon la revendication 1, **caractérisé en ce que** chaque bord d'appui inférieur (113) est prolongé par une surface d'appui (114) prévue pour recevoir les aliments issus de la goulotte d'introduction d'aliments (40).

3. Appareil électroménager de préparation culinaire selon l'une des revendications 1 ou 2, **caractérisé en ce que** l'entraînement en rotation de la vis de pressage (7) est assuré par un élément rotatif (100) formant le disque de prédécoupe (110).

4. Appareil électroménager de préparation culinaire selon l'une des revendications 1 à 3, **caractérisé en ce que** la face inférieure (73) de chacun des filets principaux (71) s'étend sur au moins la moitié de la circonférence de la vis de pressage (7).

5. Appareil électroménager de préparation culinaire selon l'une des revendications 1 à 4, **caractérisé en ce que** les filets principaux (71) s'étendent sur au moins les deux tiers de la hauteur de la vis de pressage (7) selon l'axe (15).

6. Appareil électroménager de préparation culinaire selon l'une des revendications 1 à 5, **caractérisé en ce qu'**au moins un filet secondaire (74) agencé entre deux filets principaux (71) s'interrompt à distance de l'extrémité supérieure de la vis de pressage (7).

7. Appareil électroménager de préparation culinaire selon l'une des revendications 1 à 6, **caractérisé en ce que** les filets principaux (71) s'élargissent vers l'extrémité supérieure de la vis de pressage (7).

8. Appareil électroménager de préparation culinaire selon l'une des revendications 1 à 7, **caractérisé en ce que** la vis de pressage (7) est montée amovible dans l'enceinte de travail (2).

9. Appareil électroménager de préparation culinaire selon l'une des revendications 1 à 8, **caractérisé en ce qu'**il comporte un boîtier (1) logeant un moteur électrique (11) relié à une sortie d'entraînement supérieure (12) prévue pour l'entraînement de la vis de pressage (7).

10. Appareil électroménager de préparation culinaire selon la revendication 9, **caractérisé en ce que** l'enceinte de travail (2) est montée amovible sur le boîtier (1).

11. Appareil électroménager de préparation culinaire selon l'une des revendications 9 ou 10, **caractérisé en ce que** la vis de pressage (7) comporte un organe d'entraînement (120) prévu pour être entraîné par la sortie d'entraînement supérieure (12).

12. Appareil électroménager de préparation culinaire selon l'une des revendications 1 à 11, **caractérisé en ce que** l'enceinte de travail (2) comporte un récipient de travail (3) fermé par un couvercle (4), le récipient de travail (3) présentant la sortie d'évacuation (9), le couvercle (4) présentant la goulotte d'introduction d'aliments (40).

13. Appareil électroménager de préparation culinaire selon l'une des revendications 1 à 12, **caractérisé en ce qu'**un élément de filtration (5) sépare l'enceinte de travail (2) en un premier compartiment (6) logeant la vis de pressage (7), et un deuxième compartiment (8) présentant la sortie d'évacuation (9).

14. Appareil électroménager de préparation culinaire selon l'une des revendications 1 à 13, **caractérisé en ce que** la vis de pressage (7) comporte entre deux et quatre filets principaux (71).

15. Appareil électroménager de préparation culinaire selon l'une des revendications 1 à 14, **caractérisé en ce que** la vis de pressage (7) présente une symétrie d'ordre 2, 3 ou 4.

## Patentansprüche

1. Elektrische Kücheneinrichtung, umfassend eine Druckschraube (7), die entlang einer hauptsächlich vertikalen Achse (15) in einem Arbeitsraum (2) in Drehung angetrieben wird, eine Nahrungsmitteleinführungsrinne (40) aufweisend, die mit dem oberen Ende der Druckschraube (7) kommuniziert, und einen Austragsausgang (9), wobei die Druckschraube (7) mindestens zwei Hauptgewinde (71) umfasst, die eine Unterseite (73) aufweisen, die sich über mindestens ein Viertel des Umfangs der Druckschraube (7) erstreckt, wobei eine Vorschneidscheibe (110) zwischen der Nahrungsmitteleinführungsrinne (40) und der Druckschraube (7) angeordnet ist, wobei die Vorschneidscheibe (110) Durchgänge für die geschnittenen Nahrungsmittel (111) umfasst, wobei jeder Durchgang für die geschnittenen Nahrungsmittel (111) zwischen einer oberen Eintrittskante (112) und einer unteren Anlagekante (113) angeordnet ist, wobei die Vorschneidscheibe (110) in Bezug auf die Druckschraube (7) abnehmbar ist, **dadurch gekennzeichnet, dass** sich die mindestens zwei Hauptgewinde (71) aus dem oberen Ende der Druckschraube (7) erstreckt (-en), wobei die mindestens zwei Hauptgewinde (71) mindestens zwei getrennte Nahrungsmitteleinführungsdurchgänge (72) vorsehen, wobei mindestens ein Durchgang für die geschnittenen Nahrungsmittel (111) gegenüber jedem Nahrungsmitteleinführungsdurchgang (72) angeordnet ist, und dadurch, dass die Vorschneidscheibe (110) untere Antriebsgestaltungen (115) umfasst, die eingeplant sind, um mit den oberen Antriebsgestaltungen (75) zusammenzuwirken, die am oberen Ende der Hauptgewinde (71) der Druckschraube (7) vorgesehen sind.

2. Elektrische Kücheneinrichtung nach Anspruch 1, **dadurch gekennzeichnet, dass** jede untere Anlagekante (113) durch eine Anlagefläche (114) verlängert wird, die eingeplant ist, um die aus der Nahrungsmitteleinführungsrinne (40) stammenden Nahrungsmittel zu empfangen.

3. Elektrische Kücheneinrichtung nach einem der Ansprüche 1 oder 2, **dadurch gekennzeichnet, dass** das Antreiben in Drehung der Druckschraube (7) durch ein Drehelement (100) erfolgt, das die Vorschneidscheibe (110) bildet.

4. Elektrische Kücheneinrichtung nach einem der Ansprüche 1 bis 3, **dadurch gekennzeichnet, dass** sich die Unterseite (73) jedes der Hauptgewinde (71) über mindestens die Hälfte des Umfangs der Druckschraube (7) erstreckt.

5. Elektrische Kücheneinrichtung nach einem der Ansprüche 1 bis 4, **dadurch gekennzeichnet, dass** sich die Hauptgewinde (71) über mindestens zwei Drittel der Höhe der Druckschraube (7) entlang der Achse (15) erstrecken.

6. Elektrische Kücheneinrichtung nach einem der Ansprüche 1 bis 5, **dadurch gekennzeichnet, dass** mindestens ein Sekundärgewinde (74), das zwischen zwei Hauptgewinden (71) angeordnet ist, auf Abstand zum oberen Ende der Druckschraube (7) unterbrochen wird.

7. Elektrische Kücheneinrichtung nach einem der Ansprüche 1 bis 6, **dadurch gekennzeichnet, dass** sich die Hautgewinde (71) zum oberen Ende der Druckschraube (7) hin erweitern.

8. Elektrische Kücheneinrichtung nach einem der Ansprüche 1 bis 7, **dadurch gekennzeichnet, dass** die Druckschraube (7) abnehmbar im Arbeitsraum (2) montiert ist.

9. Elektrische Kücheneinrichtung nach einem der Ansprüche 1 bis 8, **dadurch gekennzeichnet, dass** sie ein Gehäuse (1) umfasst, das einen Elektromotor (11) aufnimmt, der mit einem oberen Antriebsausgang (12) verbunden ist, der zum Antreiben der Druckschraube (7) eingeplant ist.

10. Elektrische Kücheneinrichtung nach Anspruch 9, **dadurch gekennzeichnet, dass** der Arbeitsraum (2) abnehmbar an dem Gehäuse (1) montiert ist.

11. Elektrische Kücheneinrichtung nach einem der Ansprüche 9 oder 10, **dadurch gekennzeichnet, dass** die Druckschraube (7) ein Antriebsorgan (120) umfasst, das eingeplant ist, um durch den oberen Antriebsausgang (12) angetrieben zu werden.

12. Elektrische Kücheneinrichtung nach einem der Ansprüche 1 bis 11, **dadurch gekennzeichnet, dass** der Arbeitsraum (2) einen Arbeitsbehälter (3) umfasst, der durch einen Deckel (4) verschlossen ist, wobei der Arbeitsbehälter (3) den Austragsausgang (9) aufweist, wobei der Deckel (4) die Nahrungsmitteleinführungsrinne (40) aufweist.

13. Elektrische Kücheneinrichtung nach einem der Ansprüche 1 bis 12, **dadurch gekennzeichnet, dass** ein Filterelement (5) den Arbeitsraum (2) in ein erstes Fach (6), das die Druckschraube (7) aufnimmt, und ein zweites Fach (8), das den Austragsausgang (9) aufweist, trennt.

14. Elektrische Kücheneinrichtung nach einem der Ansprüche 1 bis 13, **dadurch gekennzeichnet, dass** die Druckschraube (7) zwischen zwei und vier Hauptgewinde (71) umfasst.

15. Elektrische Kücheneinrichtung nach einem der Ansprüche 1 bis 14, **dadurch gekennzeichnet, dass** die Druckschraube (7) eine Symmetrie in der Größenordnung 2, 3 oder 4 aufweist.

## Claims

1. Electrical kitchen appliance, comprising a pressing screw (7) rotated about a mainly vertical axis (15) in a work chamber (2) having a food insertion chute (40) communicating with the upper end of the pressing screw (7), and a discharge outlet (9), the pressing screw (7) comprising at least two main threads (71) having a lower surface (73) extending over at least one quarter of the circumference of the pressing screw (7), a pre-cutting disk (110) being arranged between the food insertion chute (40) and the pressing screw (7), the pre-cutting disk (110) comprising passages for cut-up food (111), each passage for the cut-up food (111) being arranged between an upper leading edge (112) and a lower supporting edge (113), the pre-cutting disk (110) being removable with respect to the pressing screw (7), **characterised in that** said at least two main threads (71) extend from the upper end of the pressing screw (7), said at least two main threads (71) housing at least two passages for inserting separate food (72), at least one passage for the cut-up food (111) being arranged facing each food insertion passage (72), and **in that** the pre-cutting disk (110) comprises lower drive conformations (115) provided to engage with upper drive conformations (75) arranged on the upper end of the main threads (71) of the pressing screw (7).

2. Electrical kitchen appliance according to claim 1, **characterised in that** each lower supporting edge (113) is extended by a supporting surface (114) provided to receive food coming from the food insertion chute (40).

3. Electrical kitchen appliance according to one of claims 1 or 2, **characterised in that** the rotating of the pressing screw (7) is ensured by a rotating element (100) forming the pre-cutting disk (110).

4. Electrical kitchen appliance according to one of claims 1 to 3, **characterised in that** the lower surface (73) of each of the main threads (71) extends over at least half of the circumference of the pressing screw (7).

5. Electrical kitchen appliance according to one of claims 1 to 4, **characterised in that** the main threads (71) extend over at least two-thirds of the height of the pressing screw (7) along the axis (15).

6. Electrical kitchen appliance according to one of claims 1 to 5, **characterised in that** at least one secondary thread (74) arranged between two main threads (71) stops, at a distance, the upper end of the pressing screw (7).

7. Electrical kitchen appliance according to one of claims 1 to 6, **characterised in that** the main threads (71) widen towards the upper end of the pressing screw (7).

8. Electrical kitchen appliance according to one of claims 1 to 7, **characterised in that** the pressing screw (7) is removably mounted in the work chamber (2).

9. Electrical kitchen appliance according to one of claims 1 to 8, **characterised in that** it comprises a casing (1) housing an electric motor (11) connected to an upper drive outlet (12) provided to drive the pressing screw (7).

10. Electrical kitchen appliance according to claim 9, **characterised in that** the work chamber (2) is removably mounted on the casing (1).

11. Electrical kitchen appliance according to one of claims 9 or 10, **characterised in that** the pressing screw (7) comprises a drive member (120) provided to be driven by the upper drive outlet (12).

12. Electrical kitchen appliance according to one of claims 1 to 11, **characterised in that** the work chamber (2) comprises a work container (3) closed by a cover (4), the work container (3) having the discharge outlet (9), the lid (4) having the food insertion chute (40).

13. Electrical kitchen appliance according to one of claims 1 to 12, **characterised in that** a filtration element (5) separates the work chamber (2) into a first compartment (6) housing the pressing screw (7) and a second compartment (8) having the discharge outlet (9).

14. Electrical kitchen appliance according to one of claims 1 to 13, **characterised in that** the pressing screw (7) comprises between two and four main threads (71).

15. Electrical kitchen appliance according to one of claims 1 to 14, **characterised in that** the pressing screw (7) has a symmetry of the order 2, 3 or 4.
